# EUROPÄISCHE PATENTANMELDUNG

(11) **EP 3 709 188 A1**
(43) Veröffentlichungstag der Anmeldung: **16.09.2020**
(21) Anmeldenummer: 19161863.6
(22) Anmeldetag: 11.03.2019
(51) Int. Cl.: G06F 16/25, G06F 16/901

(54) **RECHNERARCHITEKTUR FÜR EINE SCHNITTSTELLE ZUR AGGREGATION VON DATENOBJEKTEN IN EINEM VERTEILTEN SYSTEM**

(71) Anmelder: Fischer Information Technology AG, 78315 Radolfzell (DE)
(72) Erfinder: BOERSIG, Rainer, 78467 Konstanz (DE)
(74) Vertreter: Schwarz und Baldus Patentanwälte

(57) **Zusammenfassung**

Die Erfindung betrifft Verfahren und eine Rechnerarchitektur (100) zur Verknüpfung von Datenobjekten (DO) aus verteilten Quellsystemen (QS). Die Rechnerarchitektur (100) umfasst eine Mehrzahl von Integrationsschnittstellen (10) zum Import von in verteilten unterschiedlichen Quellsystemen (QS) auf quellsystemspezifische Weise gespeicherten Datenobjekten (DO); ein Normalisierungsmodul (NM), das dazu eingerichtet ist, die importierten Datenobjekte (DO) von ihren quellsystemspezifischen Speicherstrukturen (DRAM) zu entkoppeln und zu normalisieren; eine zentralen Speicherstruktur (S) mit einer Graphdatenbank (GDB), in der die normalisierten Datenobjekte und deren Beziehungen repräsentiert und gespeichert sind; eine Anfrageschnittstelle (12), die ausgebildet ist, eine Anfrage (req) zu erfassen; ein Verknüpfungsmodul (VM), das ausgebildet ist, einen Verknüpfungsalgorithmus auszuführen, der auf Basis der erfassten Anfrage (req) und unter Zugriff auf die Graphdatenbank (GDV) alle normalisierten Datenobjekte (DO) zu der Anfrage aggregiert und zu einem Informationsobjekt (IO) verknüpft; und eine Ergebnisschnittstelle (14) zum Bereitstellen des erzeugten Informationsobjektes (IO).

## Beschreibung

Die vorliegende Erfindung liegt auf dem Gebiet der Softwaretechnologie und betrifft insbesondere ein System und Verfahren zur Aggregation von Datenobjekten, die in unterschiedlichen Quellsystemen verteilt gespeichert sind und deren Speicherung in einer Graphdatenbank.

Bei der Herstellung von Produkten unterschiedlicher Art (z.B. im Bereich des klassischen Maschinenbaus, der Elektrotechnik aber auch bei biotechnologischen Produkten) ist es erforderlich, über die gesamte Spanne des Produktentwicklungslebenszyklus' eine Menge von unterschiedlichen Daten zu erfassen und zu speichern. Dafür werden in der Regel spezielle informationstechnologische Systeme bereitgestellt, wie z.B. ERP- (enterprise resource planning system), CRM- (Customer Relationship Management system) oder CAD-Systeme (computer-aided design system) etc.. Diese Quellsysteme verarbeiten und speichern unterschiedliche Datentypen in unterschiedlichen Formaten. Möchte ein Anwender nun spezielle Fragen beantwortet wissen, kann es sein, dass die dafür erforderlichen Daten in die Datenbestände und/oder die Funktionalität der unterschiedlichen Quellsystemen eingebunden sind. Eine Nutzung der Daten ist somit nachteiligerweise nicht ohne weiteres oder nur aus dem jeweiligen Quellsystem heraus möglich.

Davon ausgehend liegt der vorliegenden Anmeldung die Aufgabe zugrunde, einen Ansatz zu schaffen, mit dem verteilt gespeicherte Daten aus unterschiedlichen Quellsystemen überhaupt oder verbessert für weitere unterschiedliche computergestützte Applikationen und Anwendungen genutzt werden können. Die Daten sollen zudem leichter und schneller zugänglich sein. Die aus verteilten Quellsystemen abgelegten Daten sollen zudem über eine einheitliche Zugriffstruktur zugreifbar sein ohne dass die Ausführung der Quellsysteme erforderlich ist. Weiterhin sollen die Quellsystemdaten in Antwort auf eine Anfragenachricht verknüpft werden.

Diese Aufgabe wird durch die beiliegenden Patentansprüche, insbesondere durch die computer-implementierte Rechnerarchitektur, durch das Verknüpfungsverfahren, durch ein Strukturierungsverfahren gelöst.

Gemäß einem ersten Aspekt wird die Aufgabe gelöst durch eine computer-implementierte - Rechnerarchitektur (System mit Speicherstrukturen, Prozessoreinheiten und Kommunikationsprozessen sowie optional weiteren Bestandteilen der Softwaretechnologie) zur Verknüpfung von Datenobjekten aus verteilten Quellsystemen. Die Rechnerarchitektur ist somit integrativ und umfasst:
- Eine Mehrzahl von (insbesondere quellsystemspezifischen) Integrationsschnittstellen zum Import von in verteilten unterschiedlichen Quellsystemen auf quellsystemspezifische Weise gespeicherten Datenobjekten;
- Ein Normalisierungsmodul, das dazu eingerichtet ist, die importierten Datenobjekte von ihren quellsystemspezifischen Speicherstrukturen (insbesondere Speicherformaten) zu entkoppeln und zu normalisieren (insbesondere zu ent-formatieren). "Normalisieren" bedeutet hier das Herauslösen der Daten aus der Prozessschicht des jeweiligen Quellsystems. Die Daten sollen insbesondere in eine Kommunikationsschicht für die semantische Weiterverarbeitung der Daten transferiert werden. Damit kann eine Kompatibilität zwischen unterschiedlichen Quellsystemen und Formaten hergestellt werden (Stichwort "Aus Daten werden Informationen").
- Eine zentrale Speicherstruktur mit einer Graphdatenbank, in der die normalisierten Datenobjekte und deren Beziehungen repräsentiert und gespeichert sind;
- Einer Anfrageschnittstelle, die ausgebildet ist, eine Anfrage für ein Informationsobjekt zu erfassen;
- Ein Verknüpfungsmodul, das ausgebildet ist, einen Verknüpfungsalgorithmus auszuführen, der auf Basis der erfassten Anfrage und unter Zugriff auf die Graphdatenbank alle normalisierten Datenobjekte zu der Anfrage aggregiert und zu einem Informationsobjekt verknüpft;
- Einer Ergebnisschnittstelle zum Bereitstellen des erzeugten Informationsobjektes.

Mit der erfindungsgemäßen Rechnerarchitektur kann ein informationstechnologisches System (bzw. eine Plattform) bereitgestellt werden, die die Nutzung von solchen Daten erleichtert oder überhaupt erst ermöglicht, die in unterschiedlichen Quellsystemen eingebunden sind oder für unterschiedliche Funktionalitäten bereitgestellt werden. Dazu ist es wichtig, dass die Daten zunächst aus ihrem Kontext herausgelöst werden, um nutzbar gemacht zu werden. Weiterhin ermöglicht die Plattform das flexible Erzeugen und Anwenden eines Informationsmodells, das unterschiedliche Sichten auf die Daten umfasst. Dazu sei folgendes Beispiel gegeben: Ein Servicetechniker plant einen Kundeneinsatz. Er braucht Informationen zum Einsatzort (Quellsystem CRM) und den dort eingesetzten Maschinen (Quellsystem ERP). Zu den Maschinen wir über die jeweilige individuelle Maschinenkonfiguration (Quellsystem Konfigurator) und die Stückliste (Quellsystem PLM) die konkrete Ausprägung ermittelt und die für diesen Einsatz erforderlichen Ersatzteile und Verbrauchsmaterialen sowie die notwendigen Sonderwerkzeuge aus der technischen Dokumentation (Quellsystem CMS) zusammengestellt. Der Einsatz kann aufgrund der bereitgestellten Informationen effizient durchgeführt werden. Im Anschluss an den Einsatz soll der zuständige Vertriebsmitarbeiter das Upselling-Potenzial ermitteln und direkt auf den Kunden zugehen. Der Vertrieb braucht neben den oben aufgeführten Informationen zusätzlich die Rückmeldung aus dem Service (Quellsystem SIS, Einsatzbericht) sowie die Informationen über ergänzende Produkte bzw. passende Zusatzoptionen (Quellsystem PIM). Alle Informationen werden durch die hier betrachtete Rechnerarchitektur aus den Quellsystemen zusammengeführt, intelligent verknüpft und über jeweils passende Datensichten für den Serviceeinsatz und für den Vertriebsfall bereitgestellt.

In einer bevorzugten Ausführungsform der Erfindung stellt das Quellsystem eine bestimmte Funktionalität für die quellsystem-spezifischen Datenobjekte auf. Die dort verarbeiteten und gespeicherten Datenobjekte können in einem quellsystemspezifischen Format und mit einer quellsystemspezifischen Semantik und/oder Syntax gespeichert sein. Bei dem Quellsystem kann es sich z.B. um ein ERP- oder CRM-System handeln. Die jeweiligen Quellsysteme verarbeiten unterschiedliche Datenobjekte und stellen eine unterschiedliche Funktionalität zur Verfügung. Die technische Schwierigkeit besteht deshalb darin, die in den Quellsystemen eingebetteten Datenobjekte aus ihrem Funktionalitätsverbund herauszulösen, um sie für die weitere und gemeinsame (integrierende) Verarbeitung verwertbar zu machen.

In einer weiteren, bevorzugten Ausführungsform der Erfindung wird ein branchen- und/oder kundenspezifischen Informationsmodell erzeugt und in der Graphdatenbank gespeichert. Das Informationsmodell kann von einem Modellierungsmodul dynamisch bzw. on-the-fly und parallel zu einer konkreten Anfrage erzeugt und auch während des Betriebs der Rechnerarchitektur angepasst und geändert werden. Damit kann das Informationsmodell sehr flexibel an den jeweiligen Anwendungsfall angepasst und geändert werden.

In einer weiteren, bevorzugten Ausführungsform der Erfindung umfasst die Rechnerarchitektur ein Modellierungsmodul zum Neu-Konfigurieren oder Anpassen/Abändern eines bestehenden Informationsmodells. Das Modellierungsmodul kann einen Modellierungseditor umfassen oder mit einem separaten Editor interagieren. Der Modellierungseditor dient als Benutzerschnittstelle. Er stellt eine einfach zu bedienende Oberfläche bereit, um ein zielgruppenspezifisches Informationsmodell mittels logischer Relationen (Verknüpfungen) auf die Datenobjekte zu definieren und zu speichern. Mit dem Modellierungsmodul können auf einfach Weise zielgruppenspezifische Datensichten konfiguriert werden. Zum Beispiel die Sicht "Wieviel Teile gehören zu einer Stückliste" kann umkonfiguriert werden zur Sicht "Wie hoch sind die Herstellungskosten für das Bauteil mit den Teilen der Stückliste?". Weiterhin kann z.B. von der Sicht "Welche Getriebe passen zu dem eben individuell konfigurierten Elektromotor" umkonfiguriert werden zur Sicht "Welche Getriebe mit vollständig vorhandenen Konfigurationsregeln und einer Distanz zum Einsatzgebiet von maximal 0,5 (Auswertung der Kantensumme der Graphdatenbank) passen zum eben konfigurierten Elektromotor?".

Da die Erfindung ebenfalls das oben erwähnte Modellierungsmodul (bzw. das zugeordnete Strukturierungsverfahren zur Erzeugung des Modells) bereitstellt kann das Modell dynamisch an die Anwendungssituation angepasst werde: Für einen ersten Anwendungsfall ist ein Satz von ersten Verknüpfungen relevant und korrekt und für einen zweiten Anwendungsfall ist ein Satz von zweiten, anderen Verknüpfungen relevant und korrekt. Die Ergebnisse sind somit für den ersten und zweiten Anwendungsfall komplett unterschiedlich, obwohl dieselbe Rechnerarchitektur zugrunde liegt. Mit dem Bereitstellen des Modellierungsmodels handelt es sich somit um die Steuerung eines Verknüpfungsverfahrens.

In einer weiteren, bevorzugten Ausführungsform der Erfindung ist das Modellierungsmodul dazu ausgebildet, Metadaten zu den Datenobjekten zu verarbeiten und/oder zusätzliche Metadaten automatisiert zu erzeugen und/oder manuell zu bestätigen (Erfassen eines Bestätigungssignal auf die Ausgabe eines Vorschlags für neu erzeugte Metadaten), wobei die Metadaten auch Bestandteil des Informationsobjektes sein können. Damit kann das Informationsmodell noch flexibler ausgebildet werden.

In einem weiteren Aspekt bezieht sich die Erfindung auf ein computer-implementiertes Strukturierungsverfahren zum Erzeugen, Beschreiben bzw. Anlegen einer Graphdatenbank für eine Vielzahl von Datenobjekten zur Speicherung in einer computer-implementierten Rechnerarchitektur, wie vorstehend beschrieben. Die Datenobjekte stammen aus verteilten Quellsystemen und müssen, um überhaupt einheitlich verarbeitbar zu sein, erst normalisiert werden (entformatiert etc.). Das Verfahren umfasst folgende Verfahrensschritte:
- Einlesen einer Menge von normalisierten Datenobjekten;
- Automatisches Erzeugen eines Informationsmodells durch:
   1. Einlesen von Klassifizierungsdaten zu den Datenobjekten; und Zugriff auf einen Regelspeicher, in der ein Regelwerk gespeichert ist, um auf Basis der Klassifizierungsdaten ein Informationsmodell zu erzeugen und in der Graphdatenbank zu speichern. Das Informationsmodell wird vollautomatisch erzeugt ohne Benutzerinteraktion.
      Oder:
   2. Das Informationsmodell wird automatisch erzeugt, indem ein Verfahren der künstlichen Intelligenz über die Auswertung der Klassifizierung der Informationen aus dem Quellsystem sowie der inhaltlichen Analyse Regeln für die Objektverknüpfung gelernt bzw. automatisch vorgeschlagen werden, so dass Verknüpfungen durch das System gelernt werden können. Dazu kann ein trainiertes neuronales Netzwerk verwendet werden, das mit Trainingsdaten trainiert worden ist. Die Trainingsdaten umfassen die vielfältig - je nach gewünschter Sicht auf die Daten - zu verknüpfenden, separaten Datenobjekte und ein Ergebnis in Form von Informationsobjekten mit bereits korrekt verknüpften Datenobjekten. Auf diese Art können neue Datenobjekte dann automatisch mit anderen verknüpft werden ohne dass eine Benutzerinteraktion erforderlich ist.

Das neuronale Netz umfasst eine Menge von Prozessoren oder Verarbeitungseinheiten, auch Neuronen genannt. Sie können Daten aufnehmen, verarbeiten und in verarbeiteter, modifizierter Form an andere Neuronen weiterleiten oder als Endergebnis ausgeben. Die Input-Neuronen dienen zur Aufnahme der einzelnen Datenobjekte und die Hidden-Neuronen dienen zur Verarbeitung und Verknüpfung, so dass die Output-Neuronen, das Ergebnis in Form eines aus den einzelnen, relevanten Datenobjekten verknüpften Informationsobjektes ausgeben können. Zur Anwendung ist das neuronale Netz, vorzugsweise ein einschichtiges oder mehrschichtiges Feedforward-Netz (FFN), bereits mit einem supervised learning Verfahren trainiert worden. Dabei kann das Strukturierungsverfahren zum Einsatz kommen. Die Trainingsdaten für das Training des Netzes basieren auf Anfragen des Anwenders, umfassend eine Menge von separaten Datenobjekten und dem Ergebnis mit aggregierten Informationsobjekten. Werden viele Zuordnungen gelernt, ist das Netz trainiert und kann im Einsatz automatisch auch selbständig Informationsobjekte zu neuen Mengen von Datenobjekten oder Anfragen erzeugen.

Gemäß einer weiteren, bevorzugten Ausführungsform der Erfindung werden bei dem computer-implementierten Strukturierungsverfahren auf Basis der Klassifizierungsdaten regelbasierte Mappingfunktionen zur Zuordnung von Datenobjekten zu Klassifizierungsdaten für die Informationsobjekte verwendet. Die Ausbildung der Mappingfunktion kann regelbasiert sein und definieren, welche Datenobjekte mit welchen Klassifizierungsdaten verknüpft werden sollen. Die Mappingfunktionen können auch mit Methoden der künstlichen Intelligenz gelernt werden. Dazu kann insbesondere ein mehrschichtiges neuronales Netzwerk angewendet werden, das mit Trainingsdaten und mit Verfahren zum überwachten Lernen (supervised learning) trainiert worden ist. Die Trainingsdaten umfassen zu einer Menge von Datenobjekten ein Informationsmodell und die Qualität des Informationsmodells. Für neue Datenobjekte kann dann gelernt werden, wie diese zu einem Informationsmodell überführt werden können.

In einem anderen Aspekt bezieht sich die Erfindung auf ein computer-implementiertes Verknüpfungsverfahren zum Berechnen und Bereitstellen eines Ergebnisdatensatzes für eine Anfrage, wobei der Ergebnisdatensatz eine Menge von Informationsobjekten umfasst, wobei die Informationsobjekte aus Datenobjekten berechnet werden, die in unterschiedlichen, verteilten Quellsystemen gespeichert sind, umfassend folgende Verfahrensschritte:
- Einlesen einer Anfrage zum Erzeugen eines Anfragedatensatzes;
- Ausführen eines Verknüpfungsalgorithmus für den erzeugten Anfragedatensatz, der auf Basis der erfassten Anfrage und unter Zugriff auf die Graphdatenbank der oben beschriebenen Rechnerarchitektur alle normalisierten Datenobjekte zu der Anfrage aggregiert und zu einem Informationsobjekt verknüpft, um einen vollständigen Ergebnisdatensatz mit erzeugten Informationsobjekten zu berechnen;
- Bereitstellen des berechneten Ergebnisdatensatzes über eine Ergebnisschnittstelle.

Üblicherweise wird zwischen einer Anfrage und einem Anfragedatensatz differenziert. Dies hat den technischen Vorteil und Hintergrund, dass Anfrage keine bestimmte Syntax oder Semantik erfüllen muss und kann auch nur eine Sequenz von Stichworten sein (z.B. "Anlage, Komponenten, wartungsintensiv"). Daraus wird dann ein Anfragedatensatz erzeugt, der zunächst die relevanten Quellsysteme (z.B. Bauteildatenbank und Echtzeit-Monitoringsystem) bestimmt und dann (in der Regel) eine Menge von Zugriffen auf die unterschiedlichen Quellsysteme erzeugt und diese Daten zunächst aggregiert und zwischenspeichert.

In einer bevorzugten Ausführungsform greift der Aggregationsalgorithmus auf eine Regelbasis zu, in der Regeln zum Verknüpfen von Datenobjekten hinterlegt sind. Die Regelbasis kann auch während des Betriebs und unabhängig von den Datenobjekten geändert werden. Damit wird das System flexibler.

In einer weiteren, bevorzugten Ausführungsform des computer-implementierten Verknüpfungsverfahrens enthält der mittels des Verknüpfungsverfahrens berechnete Ergebnisdatensatz eine vollständige Auflistung aller normalisierten Datenobjekte, die in der Graphdatenbank gespeichert und dem Anfrage-Datensatz gemäß dem Informationsmodell zugeordnet sind. Damit ist der Ergebnisdatensatz einerseits vollständig (enthält alle relevanten quellsystemübergreifenden Informationen) aber andererseits auch reduziert, indem nur die für die Anfrage relevanten Daten mit dem erzeugten Informationsobjekt bereitgestellt und gespeichert werden. Mit letzterem wird eine wesentliche Reduktion der Speichermenge vorgenommen, da nur eine Selektion von Daten auf der Ergebnisschnittstelle übertragen werden muss.

In einer weiteren, bevorzugten Ausführungsform des computer-implementierten Verknüpfungsverfahrens umfasst das Verknüpfungsverfahren eine Volltextsuche. Damit kann der Ergebnisdatensatz mit einem erhöhten Genauigkeitsgrad bereitgestellt werden.

In einer weiteren, bevorzugten Ausführungsform des computer-implementierten Verknüpfungsverfahrens wird der Ergebnisdatensatz in einem web-basierten Ausgabeformat und insbesondere über eine REST-Schnittstelle (REST: Representational State Transfer) bereitgestellt. Dabei handelt es sich um ein zustandsloses Protokoll. Zustandslosigkeit begünstigt die Skalierbarkeit eines Webservice. Beispielsweise können eingehende Anfragen im Zuge der Lastverteilung unkompliziert auf beliebige Maschinen verteilt werden. Da jede Anfrage in sich geschlossen ist und Anwendungsinformationen somit ausschließlich auf der Seite des Clients vorgehalten werden, ist auf der Seite des Servers keine Sitzungsverwaltung erforderlich. Ein weiterer Vorteil liegt in der besseren Ausfallsicherheit, weil die Zustandslosigkeit fordert, dass transaktionale Datenübertragung in einem einzigen Seitenaufruf erfolgt. Der Ergebnisdatensatz kann vorzugsweise in webbasierten Ausgabeformaten, wie z.B. in JSON, XML, HTML5 über die RESTful Webservice Ergebnisschnittstelle 14 bereitgestellt werden.

Gemäß einer weiteren, bevorzugten Ausführungsform des computer-implementierten Verknüpfungsverfahrens umfasst der Ergebnisdatensatz ein für den Anfragedatensatz erzeugtes Aggregationsobjekt. Bei dem Aggregationsobjekt kann es sich um Metainformationen handeln, die erst nach bzw. aus der Aggregation der unterschiedlichen Datenobjekte entsteht. Das Aggregationsobjekt und/oder das Informationsobjekt kann/können auch nur selektierte Datenelemente umfassen, nämlich solche, die von einem Berechtigungsmodul als für die Anfrageinstanz berechtigt evaluiert worden sind. Auf dem Berechtigungsmodul kann eine Berechtigungssteuerung implementiert sein. In der Berechtigungssteuerung des Berechtigungsmoduls kann konfiguriert werden, welche anfragenden Instanz welche Datenobjekte von welchen Quellsystemen sehen darf und in welcher Detailtiefe. So kann z.B. konfiguriert werden, dass finanzielle Datenobjekte oder solche mit personenbezogenen Daten nur einem beschränkten Anfragekreis verfügbar gemacht werden dürfen. Damit kann die Sicherheit erhöht werden.

Gemäß einer weiteren, bevorzugten Ausführungsform des computer-implementierten Verknüpfungsverfahrens kann das Verknüpfungsverfahren als mobile Applikation ausgebildet sein.

Eine weitere Aufgabenlösung besteht in einem Computerprogrammprodukt, das in einen Speicher eines Computers oder eines elektronischen oder technischen Gerätes geladen oder ladbar ist mit einem Computerprogramm zur Durchführung des oben näher beschriebenen Verknüpfungsverfahrens oder Strukturierungsverfahrens, wenn das Computerprogramm auf dem Computer oder dem elektronischen oder dem technischen Gerät ausgeführt wird.

Eine weitere Aufgabenlösung sieht ein Computerprogramm vor zur Durchführung aller Verfahrensschritte der oben näher beschriebenen Verfahren (zur Modellierung oder Aggregation), wenn das Computerprogramm auf einem Computer, einem elektronischen oder technischen Gerät ausgeführt wird. Dabei ist es auch möglich, dass das Computerprogramm auf einem für den Computer oder das elektronische oder technische Gerät lesbaren Medium gespeichert ist.

Im Folgenden werden die in dieser Anmeldung verwendeten Begrifflichkeiten näher erläutert.

Die Rechnerarchitektur ist computer-implementiert bzw. computer-basiert. Der Begriff "Rechnerarchitektur" bezieht sich auf eine digitale Ausführungsumgebung und umfasst bezüglich des strukturellen Aufbaus computer-basierten Einheiten mit Speicherstrukturen, Prozessoreinheiten und Kommunikationsprozessen sowie ggf. weiteren Elementen der Softwaretechnologie, wie ausführbaren Programmen und Prozessen. Die Rechnerarchitektur kann deshalb auch als System bezeichnet werden. Die Rechnerarchitektur kann Bestandteil einer Plattform sein und kann unter anderem weiterhin Bibliotheken (Libraries) und eine Laufzeitumgebung (runtime environment) umfassen. Die Rechnerarchitektur ist über Netzwerkschnittstellen an weitere Computerinstanzen angeschlossen. Insbesondere kann die Anbindung der unterschiedlichen Quellsysteme mit deren Datenspeichern über Web-basierte Schnittstellen oder andere Datenschnittstellen zur Interprozesskommunikation geregelt sein, nämlich zur Kommunikation zwischen verschiedenen Programmen auf demselben oder einem anderen Computer. Beispiele für solche Kommunikationsschnittstellen über ein Netzwerk hinweg sind Remote Procedure Call (RPC), DCOM, RMI oder CORBA, aber auch ODBC und JDBC sowie die bekannten Netzwerkprotokolle wie TCP, HTTP etc. Die Rechnerarchitektur kann das Ergebnis in Form des Ergebnisdatensatzes an weitere Instanzen zur Verfügung stellen. Insofern kann die Rechnerarchitektur als Cloud-Dienst bereitgestellt werden.

Aggregation ist ein computer-implementierter Prozess zum koordinierten Zusammensammeln von Datenobjekten aus verteilten Quellsystemen. Der Aggregationsprozess läuft automatisch ohne Benutzereingriff ab, obwohl er durch dedizierte Maßnahmen beeinflusst werden kann, die nachstehend näher erläutert werden (Anpassung des Regelwerks, Anpassung der Mappingfunktionen etc.). Er beinhaltet Zugriffe auf die Speicher der Quellsysteme.

Das Quellsystem hat eine bestimmte Funktionalität zum Verarbeiten der Daten und kann einen lokalen oder einen externen Speicher umfassen zur Speicherung der Eingangs- und/oder (verarbeiteten) Ausgangsdaten. Quellsysteme können z.B. sein ein ERP, CRM; MAM (Media Asset Management), CAD (Computer Aided Design), TRS (Ticketing and Reservation) System oder um anderweitige Steuersysteme in Bezug auf die Produktion.

Der Begriff "Datenobjekt" bezieht sich auf eine in einem Speicher gespeicherte Form von Daten. Es kann sich insbesondere um einen Datensatz in einem bestimmten Format handeln, wie z.B. ein Datum, ein Produktkennzeichen, ein Code etc.

Im Unterschied dazu bezieht sich der Begriff "Informationsobjekt" auf verknüpfte Datenobjekte. Ein Informationsobjekt ist stets ein aggregierter zusammengesetzter Datensatz. Die Verknüpfung basiert auf dem Informationsmodell. Aus einzelnen separat gespeicherten Datenobjekten wird ein integriertes Informationsobjekt in einem standardisierten Format erzeugt.

Das Berechtigungsmodul implementiert eine Berechtigungssteuerung, in der konfiguriert ist, welche anfragende Instanz und/oder welcher User berechtigt ist, Daten zu lesen. Das heißt, dass z.B. der ersten anfragenden Instanz nur der Ergebnisdatensatz mit den Informationsobjekten IO1, IO2 und IO3 übermittelt wird, während der zweiten anfragenden Instanz der Ergebnisdatensatz mit den Informationsobjekten IO1 bis IO10 bereitgestellt wird.

Das Modellierungsmodul kann als Computerprogramm ausgebildet sein und dient zur Erzeugung des Informationsmodells. Dabei können alternativ oder kumulativ zu regelbasierten Mechanismen Methoden der künstlichen Intelligenz eingesetzt werden, um einerseits dem Modellierungsmodul (als Informationsmodellierer) "gelernte" Vorschläge zur Informationsverknüpfung anzubieten und um andererseits die Methoden der künstlichen Intelligenz dazu einzusetzen, um automatisch Relationen für Objekte zu erzeugen, die über das Regelwerk nicht verknüpft werden können. Diese Beziehungen werden als "gelernte Beziehungen" gekennzeichnet, damit folgende qualitätssichernde Mechanismen zwischen regelbasierten und gelernten Relationen bei Bedarf unterscheiden können.

Über ein unüberwachtes Lernen (unsupervised learning) werden Eingangsinformationsobjekte durch eine Segmentierung anhand ihrer Klassifikation und einer inhaltlichen linguistischen Analyse verarbeitet und daraus mögliche Regeln zur (weiteren) Verknüpfung der Importobjekte im Informationsmodell vorgeschlagen.

In einer alternativen Ausführungsform der Erfindung kann die Informationsmodellierung anhand semantischer Netze und ontologischer Methoden erfolgen, die erfindungsgemäß in das Informationsmodell umgesetzt werden. Ontologische Methoden bezeichnen formal geordnete Darstellungen einer Menge von Begrifflichkeiten und der zwischen ihnen bestehenden Beziehungen in einem bestimmten Gegenstandsbereich. Ontologien bzw. diesbezügliche Verfahren werden dazu genutzt, "Wissen" in digitalisierter und formaler Form zwischen Anwendungsprogrammen und Diensten auszutauschen. Wissen umfasst das Wissen der Quellsysteme und möglicher Verknüpfungen. Ontologien enthalten Inferenz- und Integritätsregeln, also Regeln zu Schlussfolgerungen und zur Gewährleistung ihrer Gültigkeit. Im Unterschied zu einer Taxonomie, die nur eine hierarchische Untergliederung bildet, stellt eine Ontologie ein Netzwerk von Informationen mit logischen Relationen dar.

Ein Aggregationsobjekt ist ein Datensatz oder ein Teil davon, der aus der Aggregation der diversen Datenobjekte zu einem Informationsobjekt berechnet wird. Ein Aggregationsobjekt kann neu erzeugte Metainformation umfassen. Ein Aggregationsobjekt kann spezifisch für den Anfragedatensatz sein.

Die Integrationsschnittstelle ist eine Datenschnittstelle und dient zum Import von in verteilten unterschiedlichen Quellsystemen auf quellsystemspezifische Weise gespeicherten Datenobjekten.

Das Normalisierungsmodul kann in Software und/oder Hardware implementiert sein und wird vorzugsweise automatisch ohne Benutzerinteraktion betrieben. Das Normalisierungsmodul führt die Normalisierung der einzelnen importierten Datenobjekte aus. Die normalisierten Datenobjekte werden vorzugsweise mittels Hubs in einem zentralen Speicher abgelegt. Sie können zusammen mit Metainformationen abgelegt werden. Die Rechnerarchitektur ermöglicht zielgruppenspezifische, flexibel konfigurierbare Datensichten. Die Datensichten können über "Public Objects" über die Ergebnisdatenschnittstelle verfügbar gemacht werden. Die Sichten werden in einer bevorzugten Ausführungsform der Erfindung in Form von "Collections" definiert und im Sinne der Qualitätssicherung geprüft. Danach können die Sichten freigegeben werden und werden dadurch zu "Public Objects", d.h. sie sind an der Ergebnisdatenschnittstelle abrufbar. Das Normalisierungsmodul ist dazu eingerichtet, die importierten Datenobjekte von ihren quellsystemspezifischen Formaten zu entkoppeln und zu normalisieren. "Normalisieren" bedeutet hier das Herauslösen der Daten aus der Prozessschicht des jeweiligen Quellsystems und/oder kann eine Regularisierung der Daten umfassen. Die Daten sollen insbesondere in eine Kommunikationsschicht für die semantische Verarbeitung der Daten transferiert werden. Damit kann eine Kompatibilität zwischen unterschiedlichen Quellsystemen und Formaten hergestellt werden (Stichwort "Aus Daten werden Informationen"). Weitere technische Effekte sind das Mappen von Werten über in der Rechnerarchitektur definierbare Mapping-Tabellen (z.B. aus "SPRACHE" wird "Language" und aus "DE" wird "German"), das Splitten von Werten (z.B. aus Locale="de-DE" wird Country="Germany" und Language="German"), die Lokalisierung, d.h. Werte werden sprachlich neutralisiert und liegen damit in Sprachvarianten vor und werden damit übersetzbar. Darüber hinaus werden Werte über Thesauren und linguistische Verfahren anhand von Stammformreduktion (stemming) und gelernten Wortwolken normalisiert. Der Hub zur Integration der Importobjekte ist als Pipeline ausgelegt und je Quellsystem konfigurierbar.

Bei den Speicherstrukturen kann es sich um digitale Speicher oder Speichersysteme handeln. Die Speicherstruktur ist vorzugsweise zentral und quellsystemübergreifend ausgebildet. Bei der zentralen Speicherstruktur kann es sich um Strukturen in einem gemeinsamen Speicher handeln (z.B. getrennte Speicherbereiche eines Speichers) handeln. Die Speicherstruktur umfasst eine Graphdatenbank, in der die normalisierten Datenobjekte und deren Verknüpfungen gespeichert sind. Eine Graphdatenbank ist eine Datenbank, die Graphen benutzt, um stark vernetzte Informationen darzustellen und abzuspeichern. Ein solcher Graph besteht aus Knoten und Kanten, den Verbindungen zwischen den Knoten. Eine Graphdatenbank hat den technischen Vorteil, dass Ähnlichkeitsmetriken sehr effizient auf graphenbasierter Ebene umgesetzt werden können. Unter einer "Speicherstruktur" werden hier sowohl flüchtige als auch nichtflüchtige elektronische Speicher- bzw. digitale Speichermedien verstanden. Unter einem "nichtflüchtigen Speicher" wird ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben. In speziellen Ausführungen kann die Speicherstruktur als ein "flüchtiger elektronischen Speicher" ausgebildet sein, d.h. als ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln. Es kann sich insbesondere um einen DRAM Speicher handeln.

Ein Informationsmodell ist ein Mechanismus in der Informatik, um Objekte der realen Welt in der digitalen Welt abzubilden. In vorliegenden Fall ist das Informationsmodell an den jeweiligen Anwendungsfall adaptierbar. Das Informationsmodell kann somit branchen- oder kundenspezifisch ausgebildet sein. Die jeweiligen Informationsmodelle unterscheiden sich hinsichtlich der technischen Problemstellung bzw. der Fragestellung (z.B. logistische Fragestellungen oder Fragestellungen zum Aufbau und zur Zusammensetzung eines Produktes). Je nachdem müssen andere Datensichten auf dieselben oder andere Datenobjekte und deren Beziehungen in den Informationsmodell repräsentiert und gespeichert sein. Dazu werden u.a. Objekt- und Referenztypen und Attribute der Datenobjekte definiert, nämlich:
- Objekte und Typen (z.B. Kunde, Auftrag, Stückliste, Bauteil, Wartungstätigkeit etc.)
- Referenzen und Referenztypen (z.B. enthält, ist Kunde von, benötig Bauteil,...)
- Attribute (z.B. technische Parameter, wie Gewicht, Masse, Anzahl der Bauteile einer Stückliste etc.)
- Metadaten (z.B. wann eine Verknüpfung erzeugt wurde, wie oft, in welchem Zeitraum, mit wieviel anderen Datenobjekten das jeweilige Datenobjekt verknüpft ist etc.).

Das Informationsmodell ist dynamisch erweiterbar, indem neue oder geänderte Verknüpfungen gespeichert werden. Über ein Berechtigungssteuerungsmodul können Zugriffsrechte auf Daten und Berechtigungen gesteuert werden, insbesondere welcher Anwender welche Daten in den Informationsobjekten sehen darf. Hier kann somit die Sichtbarkeit der Daten geregelt werden.

Ein Verknüpfungsmodul ist ein Abschnitt in einem Computerprogramm oder ein eigenständiges Programm, das ausgebildet ist, um aus importierten und normalisierten Datenobjekten unter Zugriff auf das Informationsmodell verknüpfte Informationsobjekte zu erzeugen. Es fügt somit die für eine technische Fragestellung relevanten Datenobjekte zu einem Informationsobjekt zusammen (Stichwort: "Aus Daten wird Wissen"). Bei dem Verknüpfungsmodul wird auf eine Ontologie bzw. ein semantisches Netz angewendet. Anhand der Klassifizierung bzw. vorgegebener oder gelernter Regeln wird die Information im Informationsmodell "passenden" Objekten zugeordnet, in unserem Fall über die Graphdatenbank verknüpft.

In einer bevorzugten Ausführungsform der Erfindung wird das erzeugte Informationsobjekt in eine Nachricht integriert, die über die Ergebnisschnittstelle an anfragende Geräte (darunter auch mobile Geräte) weitergeleitet wird. Die Nachricht ist vorzugsweise verschlüsselt, um die Sicherheit zu erhöhen.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- Fig. 1: zeigt in einer schematischen Darstellung eine Übersicht über die Rechnerarchitektur gemäß einer vorteilhaften Ausführungsform der Erfindung.
- Fig. 2: ist ein Beispiel für ein Ablaufdiagramm für ein Verknüpfungsverfahren.
- Fig. 3: ist ein Beispiel für ein Ablaufdiagramm für ein Strukturierungsverfahren.
- Fig. 4: zeigt eine detaillierte Darstellung von unterschiedlichen Verkörperungen von Datenobjekten DO und
- Fig. 5: ist eine Schemadarstellung einer Rechnerarchitektur von Fig. 1.

### Detaillierte Beschreibung der Figuren

Im Folgenden wird die Erfindung anhand von Ausführungsbeispielen im Zusammenhang mit den Figuren näher beschrieben.

Die vorliegende Erfindung betrifft eine Datenaggregation, Datenverknüpfung und Datenfilterung anhand dynamisch definierter Filterkriterien und bezieht sich insbesondere auf eine Informationsplattform, die im Folgenden auch als Informationsplattform Sherlock bezeichnet wird. Die Informationsplattform Sherlock ermöglicht den geregelten Zugriff auf verteilte Datenquellen aller zugeschalteten Applikationen, in einem gemeinsamen System und insbesondere ohne Datenbrüche, die z.B. durch unterschiedliche Formate oder Datenstrukturen verursacht sein können. Mit Hilfe eines frei konfigurierbaren Information Modell Designers können Einzeldatensätze aus bislang getrennten Systemen verknüpft werden.

Es wird eine selbstlernende Künstliche Intelligenz (KI) bereitgestellt, um verborgene Informationszusammenhänge zu erkennen. Diese setzt u.a. automatisch Informationen aus unterschiedlichem Speicherstrukturen in logisch sinnvolle Beziehung, die abhängig vom Anwendungsfall konfiguriert werden kann.

Die Daten können an interne logische Adressen oder auch an externe Adressen bereitgestellt werden.

Ein technischer Vorteil ist darin zu sehen, dass die Daten in Echtzeit und applikationsneutral und endgeräteunabhängig (egal ob mobile Endgeräte oder Standgeräte verwendet werden) bereitgestellt werden.

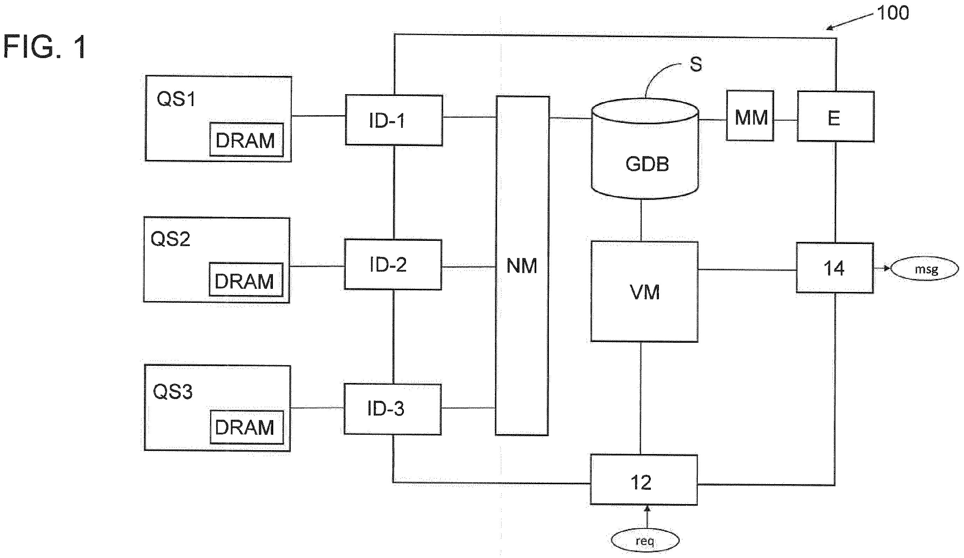

**Fig. 1** zeigt in einer Übersichtsdarstellung eine Rechnerarchitektur 100, die über mehrere Integrationsschnittstellen 10-1, 10-2, 10-3 mit unterschiedlichen Quellsystemen QS1, QS2, QS3,...datentechnisch (z.B. über eine Netzwerkverbindung, wie LAN, WLAN, Internet...) verbunden ist. Die Datenobjekte sind somit - abhängig vom jeweiligen Quellsystem QS - unterschiedlich formatiert, strukturiert und haben einen anderen Inhalt. Die Daten liegen in der Regel in einem text-basierten Format oder einer erweiterbaren Auszeichnungssprache (z.B. Extensible Markup Language - XML) vor.

Der Import der Datenobjekte DO über die Integrationsschnittstellen 10-1, 10-2, 10-3 wird vorzugsweise nach einem PUSH Mechanismus betrieben. Dies hat den Vorteil, dass immer gewährleistet ist, dass die Rechnerarchitektur 100 mit dem aktuellen Stand von Daten betrieben werden kann, der dann in Form von zu erzeugenden Informationsobjekten IO verarbeitet und ausgegeben werden kann.

Die Rechnerarchitektur 100 umfasst weiterhin ein Normalisierungsmodul NM, das dazu eingerichtet ist, die mittels der jeweiligen Integrationsschnittstelle 10 importierten Datenobjekte DO von ihren quellsystemspezifischen Speicherstrukturen DRAM zu entkoppeln und zu normalisieren.

Die derart normalisierten Datenobjekte DO und deren Verknüpfungen (mögliche logische Beziehungen) werden in einer zentralen Speicherstruktur S mit einer Graphdatenbank GDB repräsentiert und gespeichert sind.

Die Rechnerarchitektur 100 umfasst weiterhin eine Anfrageschnittstelle 12, die ausgebildet ist, eine Anfrage req zu erfassen. Die Anfrage kann sich auf unterschiedliche Fragestellungen in Bezug auf eine Auswahl von Datenobjekten unterschiedlicher Quellsysteme QS beziehen.

Die Rechnerarchitektur 100 ist mit einem Verknüpfungsmodul VM ausgebildet. Das Verknüpfungsmodul VM dient dazu, einen Verknüpfungsalgorithmus auszuführen, der auf Basis der erfassten Anfrage req und unter Zugriff auf die Graphdatenbank GDB alle normalisierten Datenobjekte DO zu der Anfrage req aggregiert und zu einem Informationsobjekt IO verknüpft.

Eine Ergebnisschnittstelle 14 dient zum Bereitstellen des erzeugten Informationsobjektes IO. Das Informationsobjekt IO kann als Nachricht msg an ein (z.B. mobiles) Endgerät oder an eine weitere Computereinheit zur Verarbeitung und/oder Analyse weitergeleitet werden.

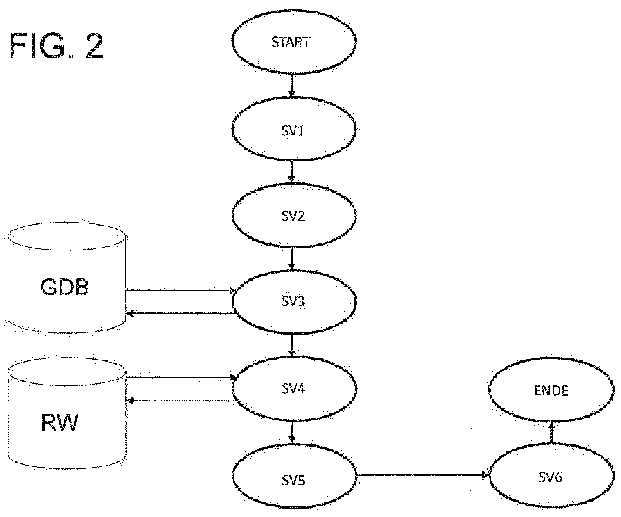

**Fig. 2** zeigt in einem Ablaufdiagramm ein Verknüpfungsverfahren gemäß einem Ausführungsbeispiel. Nach dem Start des Verfahrens wird in Schritt SV1 die Anfrage req in Bezug auf eine Fragestellung basierend auf Datenobjekten DO eingelesen. Dazu kann eine Anfrageschnittstelle (in Figur 1 nicht dargestellt) bereitgestellt werden, z.B. als GUI Element. In Schritt SV2 wird aus der eingelesenen Anfrage req ein Anfragedatensatz erzeugt. Dies hat den Vorteil, dass die Anfrage für den Anwender sehr einfach mit textbasierten Suchstrings ausgeführt werden kann, die dann automatisch in einen Anfragedatensatz transformiert wird (z.B. mit Bedingungen oder parametrisiert oder mit logischen Operatoren verknüpft etc.). Der Anfragedatensatz umfasst Zugriffsnachrichten (z.B. Datenbank queries) an die jeweiligen, einzelnen Quellsysteme QS. Die daraufhin die in den Quellsystemen ermittelten Datenobjekte DO aus den jeweiligen Quellsystemen QS über die Integrationsschnittstellen 10-1, 10-2, 10-3 eingelesen. In Schritt SV3 werden die eingelesenen Datenobjekte normalisiert und die normalisierten Datenobjekte DO zu der Anfrage req werden aggregiert unter Zugriff auf die Graphdatenbank GDB mit dem darin gespeicherten Informationsmodell. In Schritt SV4 werden die im vorhergehenden Schritt aggregierten Datenobjekte DO zu einem Informationsobjekt IO verknüpft (Stichwort: "Aus Daten entsteht Wissen"). Die Verknüpfung kann unter Zugriff auf das Regelwerk RW erfolgen, das in einer separaten Datenbank vorgehalten werden kann. Daraufhin kann in Schritt SV5 ein Ergebnisdatensatz mit den erzeugten Informationsobjekten IO berechnet werden, der dann in Schritt SV6 über die Ergebnisschnittstelle 14, z.B. in Form der Nachricht msg, ausgegeben werden kann.

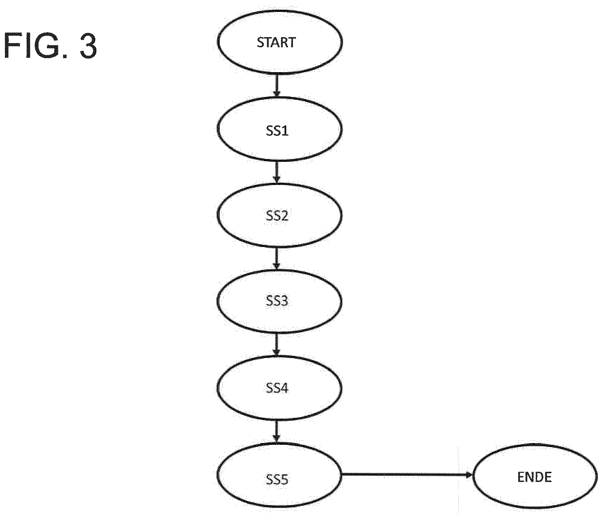

**Fig. 3** zeigt ein Strukturierungsverfahren in einem Ausführungsbeispiel. Das Strukturierungsverfahren kann als Computerprogramm ausgebildet sein und dient zum Beschreiben der Graphdatenbank GDB. In der Graphdatenbank GDB soll ein Informationsmodell abgebildet sein für eine Vielzahl von Datenobjekten DO, die aus verteilten Quellsystemen QS stammen, und deren Verbindungen untereinander gemäß dem Anwendungsfall bzw. der jeweiligen Anfrage. Nach dem Start wird in Schritt SS1 eine Menge von normalisierten Datenobjekten DO eingelesen. In Schritt SS2 werden Klassifizierungsdaten zu den Datenobjekten DO eingelesen. Daraufhin kann in Schritt SS3 ein Zugriff auf einen Regelspeicher ausgeführt werden, in dem ein Regelwerk RW gespeichert ist, um auf Basis der eingelesenen Klassifizierungsdaten in Schritt SS4 das Informationsmodell zu erzeugen und in die Graphdatenbank GDB zu speichern. Schritt SS5 ist optional und dient dazu, das erzeugte Informationsmodell auf einer Benutzerschnittstelle anzuzeigen und mittels eines Modellierungseditors E des Modellierungsmoduls MM (vgl. Fig. 1) anzupassen. Danach kann das Verfahren enden. Alternativ ist es auch möglich, ein trainiertes Netzwerk anzuwenden, um das Informationsmodell zu erzeugen. Dabei umfassen die Trainingsdaten die Anfrage mit dem zugeordneten Ergebnis (Informationsobjekt).

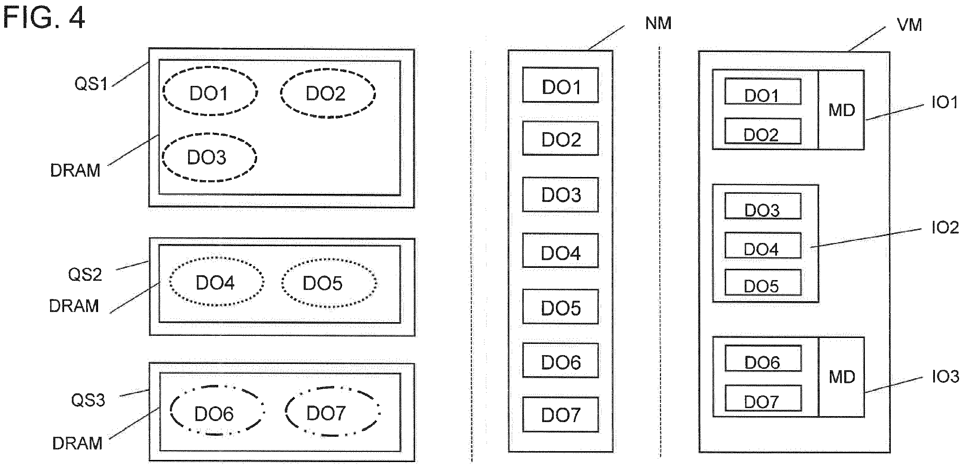

**Fig. 4** ist eine strukturelle Ansicht über die gespeicherten Datensätze. Fig. 4 weist drei Datendomänen auf: Links ist die Domäne der Quellsysteme QS abgebildet mit den jeweiligen lokalen quellsystemspezifischen Speicherstrukturen DRAM und den darin vorgehaltenen und eingebundenen Datenobjekten DO. Wie in Fig. 4 ersichtlich, hat jedes Quellsystem QS eine andere eigene Art, die Datenobjekte DO vorzuhalten. Dies soll in Fig. 4 dadurch gekennzeichnet sein, dass die Datenobjekte bei dem ersten Quellsystem QS1 gestrichelt, bei dem zweiten Quellsystem QS2 mit einer gepunkteten Umrandung und bei dem dritten Quellsystem QS3 mit einer strich-doppelpunktierten Umrandung dargestellt sind. In der Mitte befindet sich die Domäne des Normalisierungsmoduls NM, in dem die Datenobjekte in standardisierter und normalisierter Form gespeichert sind. Dies ist in Fig. 4 durch die gleichförmige Umrandung mit einem Rechteck gleicher Form und gleicher Größe repräsentiert. Die quellsystemspezifischen Eigenschaften der Datenobjekte DO (z.B. Format, Struktur ...) sind entfernt. Auf der rechten Seite befindet sich die Domäne des Verknüpfungsmoduls VM, das die Informationsobjekte IO bereitstellt. Wie in dem in Fig. 4 gezeigten Beispiel umfasst das erste Informationsobjekt IO1 die Datenobjekte DO1, DO2 und zugeordnete Metadaten, das zweite Informationsobjekt IO2 die Datenobjekte DO3, DO4 und DO5 und das dritte Informationsobjekt IO3 die Datenobjekte DO5, DO6 mit den zugehörigen Metadaten. Bei den Informationsobjekten IO handelt es sich somit üblicherweise immer um zusammengesetzte Datensätze, die mehrere Datenobjekte umfassen und ggf. noch weitere Zusatzinformationen.

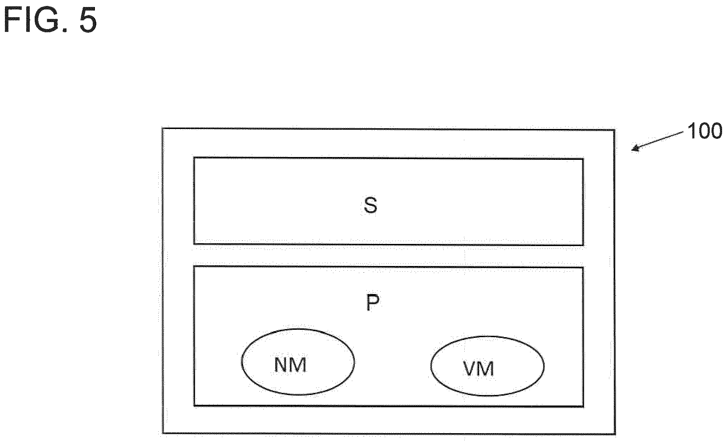

**Fig. 5** zeigt eine strukturelle Ansicht der Rechnerarchitektur 100. In einer einfachen Ausführungsform umfasst dies einen Speicher mit der Graphdatenbank GDB und eine Prozessoreinheit P, die das Normalisierungsmodul NM und das Verknüpfungsmodul VM und optional das Modellierungsmodul MM (in Fig. 5 nicht gezeigt) umfasst. Das Normalisierungsmodul NM dient zur Normalisierung der importierten Datenobjekte in ein standardisiertes einheitliches Format bzw. in eine einheitliche Struktur. Das Verknüpfungsmodul VM dient zur Ausführung des Verknüpfungsverfahrens.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Es liegt somit z.B. ebenso im Rahmen der Erfindung alternativ oder kumulativ zur Anfrageschnittstelle 12 weitere Schnittstellen zur Eingabe von relevanten Daten (z.B. zeitbasierte und/oder ereignisbasierte Kontextinformationen) oder andere Ausgabeschnittstellen (kumulativ zur Ergebnisdatenschnittstelle 14) bereitzustellen. Dabei kann es sich z.B. auch um externe Ausgabegeräte handeln. Für einen Fachmann ist es insbesondere offensichtlich, dass die Erfindung nicht nur für bestimmte Quellsysteme (ERP, CRM etc.), sondern auch für beliebige Steuersysteme und/oder datenverarbeitende Systeme angewendet werden kann.

Darüber hinaus können die Bauteile der Rechnerarchitektur auf mehrere physikalische Produkte verteilt realisiert sein. Alternativ können sie in einem Produkt implementiert sein.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Computer-implementierte Rechnerarchitektur (100) zur Verknüpfung von Datenobjekten (DO) aus verteilten Quellsystemen (QS), umfassend:
- Eine Mehrzahl von Integrationsschnittstellen (10) zum Import von in verteilten unterschiedlichen Quellsystemen (QS) auf quellsystemspezifische Weise gespeicherten Datenobjekten (DO);
- Ein Normalisierungsmodul (NM), das dazu eingerichtet ist, die importierten Datenobjekte (DO) von ihren quellsystemspezifischen Speicherstrukturen (DRAM) zu entkoppeln und zu normalisieren;
- Einer zentralen Speicherstruktur (S) mit einer Graphdatenbank (GDB), in der die normalisierten Datenobjekte und deren Beziehungen repräsentiert und gespeichert sind;
- Einer Anfrageschnittstelle (12), die ausgebildet ist, eine Anfrage (req) zu erfassen;
- Ein Verknüpfungsmodul (VM), das ausgebildet ist, einen Verknüpfungsalgorithmus auszuführen, der auf Basis der erfassten Anfrage (req) und unter Zugriff auf die Graphdatenbank (GDV) alle normalisierten Datenobjekte (DO) zu der Anfrage aggregiert und zu einem Informationsobjekt (IO) verknüpft;
- Einer Ergebnisschnittstelle (14) zum Bereitstellen des erzeugten Informationsobjektes (IO).

2. Computer-implementierte Rechnerarchitektur (100) nach Anspruch 1, bei dem das Quellsystem (QS) eine spezifische Funktionalität für quellsystem-spezifische Datenobjekte (DO) aufweist und Datenobjekte (DO) in einem quellsystemspezifischen Format und mit einer quellsystemspezifischen Semantik und/oder Syntax speichert.

3. Computer-implementierte Rechnerarchitektur (100) nach einem der vorangehenden Ansprüche, bei der in der Graphdatenbank (GDB) ein Informationsmodell für die normalisierten Datenobjekte (DO) gespeichert ist und wobei das Informationsmodell von einem Modellierungsmodul (MM) erzeugt und auch während des Betriebs der Rechnerarchitektur (100) geändert werden kann.

4. Computer-implementierte Rechnerarchitektur nach dem unmittelbar vorangehenden Anspruch, bei der das Modellierungsmodul (MM) einen Modellierungseditor (E) umfasst, um ein zielgruppenspezifisches Informationsmodell mittels logischer Relationen auf die normalisierten Datenobjekte (DO) zu definieren und zu speichern.

5. Computer-implementierte Rechnerarchitektur nach einem der vorangehenden Ansprüche 3 oder 4, wobei das Modellierungsmodul (MM) dazu ausgebildet ist, Metadaten zu den Datenobjekten (DO) zu verarbeiten und zusätzliche Metadaten automatisiert und/oder manuell zu erzeugen, wobei die Metadaten auch Bestandteil des Informationsobjektes (IO) sein können.

6. Computer-implementiertes Strukturierungsverfahren zum Beschreiben einer Graphdatenbank (GDB) für eine Vielzahl von Datenobjekten, die aus verteilten Quellsystemen (QS) stammen zur Speicherung in einer computer-implementierten Rechnerarchitektur (100) gemäß einem der Patentansprüche 1 bis 5, umfassend folgende Verfahrensschritte:
- Einlesen einer Menge von normalisierten Datenobjekten (DO);
- Einlesen von Klassifizierungsdaten zu den Datenobjekten;
- Zugriff auf einen Regelspeicher, in der ein Regelwerk (RW) gespeichert ist, um auf Basis der Klassifizierungsdaten ein Informationsmodell zu erzeugen und in der Graphdatenbank (GDB) zu speichern.

7. Computer-implementiertes Strukturierungsverfahren nach dem vorangehenden Verfahrensanspruch, bei dem das Informationsmodell auch während dessen Verwendung und/oder während des Betriebs der Rechnerarchitektur (100) erweiterbar ist.

8. Computer-implementiertes Strukturierungsverfahren nach einem der vorangehenden Verfahrensansprüche, bei dem auf Basis der Klassifizierungsdaten regelbasierte Mappingfunktionen zur Zuordnung von Datenobjekten (DO) verwendet werden.

9. Computer-implementiertes Verknüpfungsverfahren zum Berechnen und Bereitstellen eines Ergebnisdatensatzes für eine Anfrage (req), wobei der Ergebnisdatensatz eine Menge von Informationsobjekten (IO) umfasst, wobei die Informationsobjekte (IO) aus Datenobjekten (DO) berechnet werden, die in unterschiedlichen, verteilten Quellsystemen (QS) gespeichert sind, umfassend folgende Verfahrensschritte:
- Einlesen (SV1) einer Anfrage (req) zum Erzeugen (SV2) eines Anfragedatensatzes;
- Ausführen eines Verknüpfungsalgorithmus für den erzeugten Anfragedatensatz, der auf Basis der erfassten Anfrage und unter Zugriff auf die Graphdatenbank (GDB) einer Rechnerarchitektur (100) nach einem der Ansprüche 1 bis 5 alle normalisierten Datenobjekte (DO) zu der Anfrage aggregiert (SV3) und zu einem Informationsobjekt (IO) verknüpft (SV4), um einen vollständigen Ergebnisdatensatz mit erzeugten Informationsobjekten (IO) zu berechnen (SV5);
- Bereitstellen (SV6) des berechneten Ergebnisdatensatzes mittels einer Ergebnisschnittstelle (14).

10. Computer-implementiertes Verknüpfungsverfahren nach dem vorangehenden Anspruch, bei dem der Aggregationsalgorithmus auf ein Regelwerk (RW) zugreift, in den Regeln zum Verknüpfen von Datenobjekten (DO) hinterlegt sind.

11. Computer-implementiertes Verknüpfungsverfahren nach einem der vorangehenden Ansprüche, bei dem der vom Aggregationsalgorithmus berechnete Ergebnisdatensatz eine vollständige Auflistung aller Datenobjekte (DO) enthält, die dem Anfragedatensatz gemäß dem Informationsmodell zugeordnet sind.

12. Computer-implementiertes Verknüpfungsverfahren nach einem der vorangehenden Ansprüche, bei dem der Aggregationsalgorithmus eine Volltextsuche umfasst.

13. Computer-implementiertes Verknüpfungsverfahren nach einem der vorangehenden Ansprüche, bei dem der Ergebnisdatensatz in einem web-basierten Ausgabeformat über ein REST Schnittstelle (14) bereitgestellt wird.

14. Computer-implementiertes Verknüpfungsverfahren nach einem der vorangehenden Ansprüche, bei dem auf den Ergebnisdatensatz ein Filteralgorithmus angewendet wird, so dass der Ergebnisdatensatz nur selektierte Informationsobjekte (IO) umfasst, nämlich solche, die von einem Berechtigungsmodul als für eine Anfrageinstanz berechtigt evaluiert worden sind.

15. Computer-implementiertes Verknüpfungsverfahren nach einem der vorangehenden Ansprüche, bei dem das Verknüpfungsverfahren als mobile Applikation ausgebildet ist.

16. Computerprogrammprodukt mit einem Computerprogramm zur Ausführung eines Verfahrens nach einem der auf das Strukturierungsverfahren oder auf das Verknüpfungsverfahren bezogenen Patentansprüche, wenn das Computerprogramm auf einem Computer ausgeführt wird.
